(19) Europäisches Patentamt
European Patent Office
Office européen des brevets

(11) **EP 4 193 105 B1**

(12) **EUROPEAN PATENT SPECIFICATION**

(45) Date of publication and mention
of the grant of the patent:
**04.09.2024  Bulletin 2024/36**

(21) Application number: **21748964.0**

(22) Date of filing: **28.07.2021**

(51) International Patent Classification (IPC):
*F27B 3/26* *(2006.01)*      *F27D 17/00* *(2006.01)*
*C21C 5/52* *(2006.01)*

(52) Cooperative Patent Classification (CPC):
**F27B 3/26; F27D 17/003; F27D 17/004;**
C21B 2100/44; C21B 2100/64; C21C 2005/5288;
C21C 2100/06; Y02P 10/20

(86) International application number:
**PCT/IB2021/056880**

(87) International publication number:
**WO 2022/029568 (10.02.2022 Gazette 2022/06)**

(54) **FLUE GAS TREATMENT APPARATUS AND RELATIVE METHOD**

RAUCHGASBEHANDLUNGSVORRICHTUNG UND ENTSPRECHENDES VERFAHREN

APPAREIL DE TRAITEMENT DE GAZ DE COMBUSTION ET PROCÉDÉ ASSOCIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.08.2020  IT 202000019201**

(43) Date of publication of application:
**14.06.2023  Bulletin 2023/24**

(73) Proprietor: **Tenova S.p.A.**
**20149 Milano (IT)**

(72) Inventor: **CHIARULLO, Enzo Josef**
**20144 Milano (IT)**

(74) Representative: **PGA S.p.A.**
**Via Mascheroni, 31**
**20145 Milano (IT)**

(56) References cited:
**EP-A1- 0 026 118**      **FR-A- 1 364 535**
**US-A1- 2012 320 941**

**Description**

FIELD OF THE INVENTION

The present invention relates to a treatment apparatus of flue gases emitted by industrial plants, i.e. metal treatment or casting plants for ferrous and non-ferrous metals, wherein the heat energy of the flue gases is at least partially recovered for reuse. The treatment apparatus of the present invention relates to the abatement or at least reduction of one or more types of pollutants comprised into the flue gases. The present invention also relates to a respective flue gas treatment method.

BACKGROUND

In industrial processes where high temperature thermal processes are involved, high concentrations of pollutants in the flue gases are experienced in particular when raw materials are contaminated with polymeric elements. This happens, for example, in municipal solid waste treatment plants, Waste-to-Energy plants or in steel plants for recovering of scrap metals, in particular wherein ferrous scrap are melted in furnaces, such as electric arc furnaces. The material introduced in these industrial processes (municipal waste in waste-to-energy plants, scrap metal in electric arc furnaces) inevitably contains polymeric contaminants, which, as a result of high temperatures and subsequent cooling, may give rise to dioxins and furans which, if spread into the atmosphere, carried by the exhaust gases produced by the industrial process, may determine a risk for human health.

In the case of recovery processes of metal scrap, in particular ferrous scrap, which are often contaminated with polymeric substances, such as paints, coatings or plastic elements, an electric arc furnace (EAF) is usually used. The polymeric substances are subject to combustion, the products of which end up in the gas stream generated by the processes conducted in the EAF. The EAF process generally involves very high temperatures, in particular above 1500°C, leading to dioxin precursors in flue gases. Furthermore, the EAF process is characterized by a high discontinuity due to material loading operations into the EAF, of melting processes of the material and subsequent molten metal casting: this causes the flow rate of the flue gases to be treated to vary during the process steps which is batch type. Lastly, the high temperatures of the gases emitted by the EAF process makes interesting energy recovery for further uses.

A known method to reduce the pollutants in the flue gases implies to keep these gases at temperatures above 700 - 800°C, in particular above 850°C, for a time longer than 2 sec, followed by rapid cooling, preferably higher than 200-300°C/sec, of these flue gases between a temperature of 600°C and 250°C. Injection of activated carbon may also be provided to reduce the pollutants.

Rapid cooling of the flue gases may be obtained by means of Quenching Towers where a mixture of air and water at ambient pressure and temperature is injected into the flue gases flow. The gases, in intimate contact with the injected mixture, release heat necessary for the evaporation of the liquid portion of the mixture and cool down within the volume of the tower. The tower is designed so that the speed of the flue gas flow, combined with the speed of the injected water flow, allows the desired cooling rates of the flue gases to be achieved. However, a drawback related to the Quenching Towers is that this process does not allow to recover, at least partially, the thermal energy present in the flue gases: indeed, the steam generated by the process is dispersed into the atmosphere.

A system to recover thermal energy from industrial processes is known as "Waste Heat Boiler" (WHB) wherein a working fluid flows within a plurality of tubes, defining a heat exchanger, to receive thermal energy from the flue gases: these tubes are fluidly connected to a steam drum which receives a gaseous phase of the working fluid. The working fluid circulation is determined by the heat itself, which causes the gaseous phase of the working fluid to flow towards the steam drum, and the liquid phase of the working fluid to flow from the steam drum towards the heat exchanger to subtract thermal energy from the flue gases of the industrial plant: in this kind of WHB the fluid circulation is refereed as a "natural circulation", to specify that no pumps are involved to cause the fluid flow (also possible in assisted or forced circulation, in which at least one pump for the circulation of the working fluid is installed). Anyhow, being the flow rate of the working fluid dependent upon the thermal energy exchanged with the flue gases, which in turn are generated in a non-constant amount as commonly happens in the EAF processes, it is not possible to obtain an adequate cooling rate of the flue gases when flow rate changes. A cooling rate of the fumes outside the above mentioned parameters leads to conditions that, through de novo synthesis, contributes the reformation of dioxins and furans that would be dispersed in the atmosphere.

Patent documents US 2012/320941A and FR 1 364 535 A also disclose a treatment apparatus of flue gases emitted from an EAF.

To summarize, the applicant points out that both the above described technologies, namely the quick Quenching Towers and the Waste Heat Boiler technologies, have important drawbacks when a combination of pollutants reduction in the flue gases and thermal energy recovery is required.

SCOPE OF THE INVENTION

The scope of this invention is therefore to at least partially solve one or more of the drawbacks and/or limitations of the previous solutions.

A first scope is to provide a flue gas treatment apparatus and relative method able to reduce one or more pollutants, in particular dioxin and furans, contained into the flue gases emitted from industrial plants where combustion or high temperature processes are involved.

A further scope is to provide a flue gas treatment apparatus and relative method able to recover, at least partially, thermal energy contained in the flue gases for further uses.

A further scope is to provide a flue gas treatment apparatus and relative method able to combine energy recovery and reduction of the pollutants in the flue gases.

A further scope is to provide a flue gas treatment apparatus and relative method able to improve control of the cooling rate of the flue gases during the pollutants treatment process.

A further scope is to provide a flue gas treatment apparatus and relative method reliable, effective for the reduction of the pollutants and efficient in terms of energy recovery.

These scopes and more, which will appear more from the following description, are substantially achieved by a flue gas treatment apparatus and relative method in accordance with one or more of the following claims and/or aspects.

SUMMARY SECTION

The present invention is disclosed in appended claims 1-15.

DRAWINGS

Some embodiments and some aspects of the invention will be described below with reference to the attached drawings, provided for illustrative purposes only, wherein:

- Figure 1 is a schematic view of a treatment apparatus according to an embodiment of the present invention;
- Figure 2 is a schematic view of a treatment apparatus according to a further embodiment of the present invention.

DEFINITIONS

In this detailed description, corresponding parts illustrated in the various figures are indicated with the same numerical references. The figures may illustrate the invention by means of non-scale representations; therefore, parts and components illustrated in the figures relating to the object of the invention may relate exclusively to schematic representations.

**Upstream and/ downstream**

The terms upstream and downstream refer to a direction or trajectory of advancement of a fluid configured to flow within the fluid tubes during normal usage of the treatment apparatus. In particular the terms upstream and downstream relative to the gas circuit refer to the gas direction from the gas source, namely the industrial plant, towards an outlet of the treatment apparatus.

DETAILED DESCRIPTION

**Treatment apparatus and method**

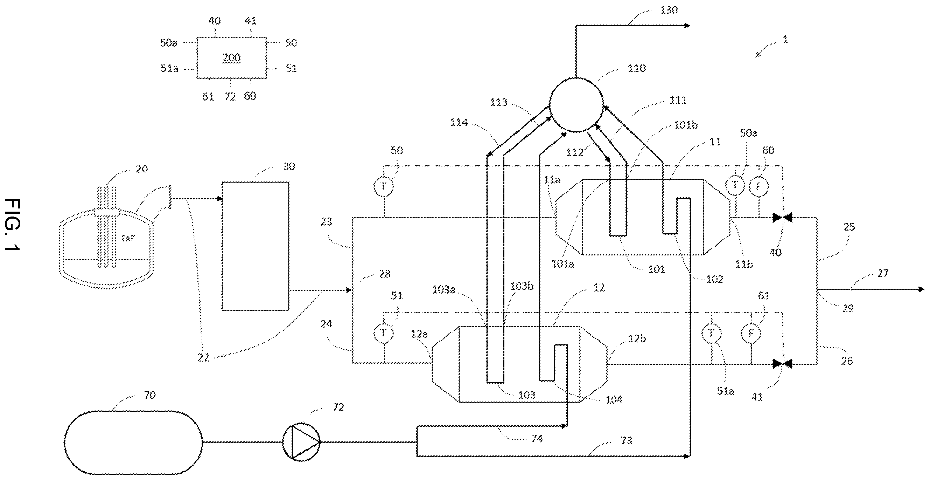

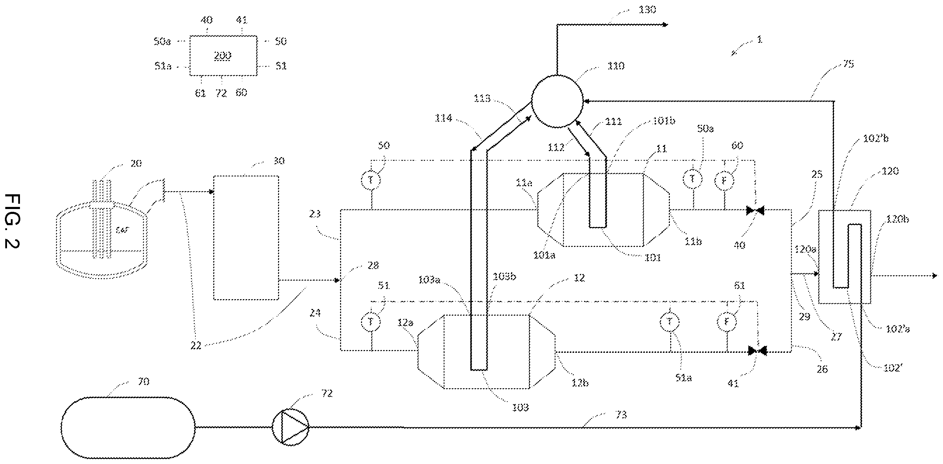

The reference number 1 is directed to a treatment apparatus, shown according to a first and a second embodiment respectively in figures 1 and 2, of hot flue gases emitted by an industrial plant, such as municipal solid waste treatment plants, waste-to-Energy plants, or electric arc furnaces (EAF) wherein scrap metal, in particular ferrous scrap, is melted. The hot flue gases emitted often comprise several pollutants such as dioxin and/or furans emissions, which determine health risks for human beings. The flue gases emitted by the industrial plants are also characterized by high temperatures, for example comprised between 800°C and 1600°C, which from one hand allow an at least partial recovery of the thermal energy and, from another hand, lead to generation of the above mentioned pollutants if not adequately treated thermally and chemically.

The industrial plant is referred as a gas source 20 as shown in figures 1 and 2, comprising a furnace, such as electric arc furnaces (EAF): a main flue gas supply duct 22 is configured to receive and transport the hot flue gases out of the industrial plant towards the treatment apparatus to allow gas treatment and energy recovery. The main flue gas supply duct 22 is configured to transport a total flow rate of the flue gases from the gas source 20 towards the treatment apparatus.

The main flue gas supply duct 22 branches at a branch point 28 into a first and a second flue gas supply ducts 23, 24, wherein the first flue gas supply duct 23 is connected to a first heat exchange chamber 11 while the second flue gas supply duct 24 is connected to a second heat exchange chamber 12. Therefore the flue gases may flow from the gas source 20, into the main flue gas supply duct 22, split into the first and the second flue gas supply ducts 23, 24 and enter into the first and the second chambers 11, 12. A sedimentation chamber 30 may be also provided on the gas supply duct 22 where - in a known way - the fumes decrease their speed and the coarsest part of the dust in suspension precipitates by gravity and is collected in the bottom of the sedimentation chamber 30: depending on the process requirements, air or oxygen may be injected to complete the combustion of gases such as CO and H2.

Each heat exchange chambers 11, 12 have respective inlets 11a, 12a, fluidly connected respectively to the first and the second flue gas supply ducts 23, 24, and respective outlets 11b, 12b connected respectively to a first and a second flue gas exhaust ducts 25, 26. The first and second heat exchange chambers 11, 12 define internally an inner volume for gas passage: according to an embodiment, the size of the first heat exchange chamber 11 is equal to the size of the second heat exchange chamber 12. Alternatively, according to a further embodiment, the first and second heat exchange chambers, and therefore the respective inner volumes, may have different sizes: for example the inner volume of the first heat exchange chamber 11 may be higher than the one of the second heat exchange chamber 12.

According to the embodiments shown in figures 1 and 2, the first and a second flue gas exhaust ducts 25, 26 may converge at a converging point 29 into a common or main flue gas exhaust duct 27 configured to transport the flue gases, in particular the total amount of flue gases, emitted by the flue gas source 20.

The combination of the first flue gas supply duct 23, the first flue gas exhaust duct 25 and the first heat exchange chamber 11 defines a first branch of the gas circuit: analogously, the combination of the second flue gas supply duct 24, the second flue gas exhaust duct 26 and the second heat exchange chamber 12 defines a second branch of the gas circuit: notably the first and the second branches are arranged in parallel and fluidly communicate each other only through the branch point 28 and the converging point 29. In other terms, the flue gases flowing in the first branch are treated into the first heat exchange chamber 11 while the flue gases flowing into the second branch are treated into the second heat exchange chamber 12.

The gas circuit also comprises at least one between a temperature measuring device 50, 50a, 51, 51a and a flow rate measuring device 60, 61 configured to provide respectively a representative signal of a temperature and a flow rate of the flue gases. A control unit 200 is provided and configured to receive the respective representative signal and to determine the temperature and/or the flow rate values of the flue gases.

In more detail, the temperature measuring device comprises at least one high temperature sensor 50, 51 arranged upstream the first and the second heat exchange chambers 11, 12. The high temperature sensor may be arranged on the main flue gas supply duct 22 upstream the branch point 28: in this case the gas circuit, according to an optional embodiment, may comprises a single high temperature sensor. Alternatively, as shown in the embodiments of figures 1 and 2, the high temperature sensor comprises a first high temperature sensor 50 arranged upstream the first heat exchange chamber 11 on the first flue gas supply duct 23, and a second high temperature sensor 51, separated and distinct from the first high temperature sensor 50, arranged upstream the second heat exchange chamber 12 on the second flue gas supply duct 24.

The temperature measuring device may also comprise at least one low temperature sensor 50a, 51a arranged downstream the first and second heat exchange chambers 11, 12. According to an embodiment not shown in the attached figures, the low temperature sensor may be arranged on the main flue gas exhaust duct 27 downstream the converging point 29. Alternatively, according to the embodiments shown in figures 1 and 2, the temperature measuring device comprises a first low temperature sensor 50a arranged on the first flue gas exhaust duct 25 downstream the first heat exchange chamber 11, and a second low temperature sensor 51a arranged on the second flue gas exhaust duct 26 downstream the second heat exchange chamber 12.

According to the above, the control unit is configured to determine a temperature variation parameter as a difference between the temperature values measured by the high temperature sensor 50, 51 and the low temperature sensor 50a, 51a across the first and/or the second heat exchange chambers 11, 12. In more detail, the control unit is configured to determine a first temperature variation parameter as a difference between the temperature value measured by the first high temperature sensor 50 and the temperature value measured by the first low temperature sensor 50a: in other terms, the temperature variation across the first heat exchange chamber 11 is representative of a cooling process of the flue gases flowing in the first branch. Analogously, the control unit 200 is configured to determine a second temperature variation parameter as a difference between the temperature value measured by the second high temperature sensor 51 and the temperature value measured by the second low temperature sensor 51a: the temperature variation across the second heat exchange chamber 12 is representative of a cooling process of the flue gases flowing in the second branch.

The treatment apparatus also comprises the flow rate measuring device which in turn comprises a first and a second flow rate sensors 60, 61 respectively arranged on the first branch and on the second branch of the gas circuit, each configured to provide signals representing a flow rate of the flue gases respectively into the first and the second branches: the control unit is then configured to receive said representative signals of the flow rate and determine a first and a second flow rate values of the flue gases relative to the first and the second branches. In more detail, the first and the second flow rate sensors 60, 61 may be arranged respectively on the first and the second flue gas supply ducts 23, 24, or on the first and the second flue gas exhaust ducts 25, 26. In other terms, the flow rate sensors 60, 61 may be arranged upstream or downstream the heat exchange chambers: anyhow, a downstream arrangement is preferred for safety and reliability reasons due to the lower temperatures involved.

The flow rate measuring device 60, 61 may comprise a differential pressure sensor or a Pitot probe configured to provide a signal representing a differential pressure, the control unit is then configured to determine, based on said representative signal of differential pressure, the flow rate or a speed of the flue gases flowing within the gas circuit.

The gas circuit also comprises at least one regulating member 40, 41 movable at least between a first position and a second position. In the first position the transit of the flue gases from the flue gas source 20 into the first heat exchange chamber 11 is allowed, while transit of flue gases from the flue gas source 20 into the second heat exchange chamber 12 is prevented or reduced: in the second position, the transit of the flue gases from the flue gas source 20 into both the first and the second heat exchange chambers 11, 12 is allowed. In other terms, the regulating member is configured to deviate the flue gases towards the first heat exchange chamber or alternatively towards both the first and the second chamber. Therefore, when the regulating member is in the first position, a heat exchange surface between the flue gases and the working fluid is lower than a respective heat exchange surface when the regulating member is in the second position. This also determines that the amount of working fluid involved in the heat exchange with the flue gases when the regulating member is in the first position is lower than an amount of working fluid involved in the heat exchange with the flue gases when the regulating member is in the second position.

In addition, the regulating member 40, 41 may be also movable in a third position wherein transit of the flue gases from the flue gas source 20 into the first heat exchange chamber 11 is prevented or reduced, while transit of flue gases from the flue gas source 20 into the second heat exchange chamber 12 is allowed. This last case may be particularly interesting when the sizes of the first and the second heat exchange chambers are different each other: indeed, in this case the amount of working fluid involved for heat exchange in the first heat exchange unit 101 is different, for example lower, than the one involved in the second heat exchange unit 103. If the first and the second heat exchange chambers have different sizes, the control unit may command the regulating member in the first, second and third position according to a desired heat exchange: in other terms, the amount of working fluid involved in the cooling process changes between the first, second and third position of the regulating member, and therefore the thermal energy exchanged (and thus the cooling performance) changes as well. Therefore, a three different energy exchange levels may be defined between the flue gases and the working by commanding the regulating member in the first, second and third positions.

In an embodiment, the regulating member comprises a first and a second dampers 40, 41 respectively arranged on the first branch and on the second branch of the gas circuit: these dampers are, de facto, shutters which prevent or allow the gas passage through the first and/or the second branches. A partial opening of the dampers may result in a regulation of the flow rate of the flue gases.

Alternatively, the regulating member comprises a first and a second booster 40, 41 respectively arranged on the first branch and on the second branch of the gas circuit, and wherein the booster comprises a fan configured to promote or prevent the flow rate of the flue gases within the gas circuit. The booster comprises an electrical motor, connected to and commanded by the control unit configured, to rotate the fan: in particular the control unit may vary the angular speed of the fan to regulate the flow rate of the flue gases within the gas circuit.

The regulating members may be arranged upstream or, alternatively, downstream the heat exchange chambers 11, 12: in particular the regulating members may be arranged both on the first and second flue gas supply ducts 23, 24, or on the first and second flue gas exhaust ducts 25, 26, as shown in the figures 1 and 2. Furthermore, regulating members may be arranged both upstream and downstream the heat exchange chambers 11, 12.

The treatment apparatus 1 also comprises a fluid circuit configured to transport a working fluid, for example water, in a liquid phase and gaseous phase, to cause a cooling of the flue gases when passing through the heat exchange chambers 11, 12. The fluid circuit comprises a working fluid source 70, at least one fluid delivery duct 73, 74 and a steam drum 110, wherein the fluid delivery duct 73, 74 fluidly connects the working fluid source 70 to the steam drum 110. The working fluid source 70 is configured to deliver working fluid to the steam drum 110 through the fluid delivery duct 73, 74: a pump, i.e. an electric pump, may be provided on the fluid delivery duct 73, 74 to determine flow of the working fluid towards the steam drum.

The fluid circuit further comprises at least a first and a second heat exchange units 101, 103 respectively arranged into, or in thermal contact with, the first and second heat exchange chambers 11, 12 and configured to allow heat exchange between the flue gases and the working fluid. The first heat exchange unit 101 comprises at least one inlet 101a configured to receive working fluid and at least one outlet 101b configured to deliver working fluid: the inlet 101a of the first heat exchange unit 101 is fluidly connected to an outlet of the steam drum 110 through a first return duct 112, while the outlet 101b of the first heat exchange unit 101 is fluidly connected to an inlet of the steam drum 110 through a first delivery duct 111. Analogously, the second heat exchange unit 103 comprises at least one inlet 103a configured to receive working fluid from the steam drum, and at least one outlet 103b configured to deliver working fluid to the steam drum: the inlet 103a of the second heat exchange unit 103 is fluidly connected to an outlet of the steam drum 110 through a second return duct 114, while the outlet 103b of the second heat exchange unit 103 is fluidly connected to an inlet of the steam drum 110 through a second delivery duct 113. Notably, the first heat exchange chamber 11 may comprise two or more first heat exchange units 101: analogously, the second heat exchange chamber 12 comprises two or more second heat exchange units 103.

According to an embodiment, the first heat exchange unit 101 defines a first surface for heat exchange between the flue gases and the working fluid, and the second heat exchange unit 103 defines a second surface for heat exchange between the flue gases and the working fluid: the first surface may be different from the second surface. In this way, the heat exchanged in the first heat exchange chamber 11 will be different from the one exchanged in the second heat exchange chamber 12.

Based on what above, the first and the second heat exchange chambers 11, 12, combined with the first and second heat exchange units 101, 103, are configured to determine heat exchange between the hot flue gases flowing in the gas circuit and the working fluid flowing in the fluid circuit. The heat exchange between the flue gases and the working fluid determines state transition of the working fluid from liquid phase into gaseous phase: this transition determines the flow of the working fluid through the fluid circuit: this is also referred as natural circulation as no pump is provided to cause circulation of the working fluid within the fluid circuit (in other embodiments it is possible to provide one or more pumps to obtain assisted or forced circulation). In particular this state transition determines transit of the gaseous phase of working fluid from the first and/or the second heat exchange units 101, 103 towards the steam drum 110. Therefore, the steam drum 110 is configured to receive the working fluid in gaseous state through the first and second delivery ducts 111, 113: the working fluid in liquid state is then returned to the heat exchange units 101, 103 through the first and second return ducts 112, 114.

More in detail, when the regulating members 40, 41 are arranged in the first position, the heat exchange occurs in the first heat exchange chamber 11 while the heat exchange is prevented in the second heat exchange chamber 12. Therefore in this condition, the working fluid flows in gaseous state from the first heat exchange unit 101 to the steam drum 110, while no fluid flows from the second heat exchange unit 103 to the steam drum.

Instead, when the regulating members 40, 41 are arranged in the second position, the heat exchange occurs in both the first and the second heat exchange chambers 11, 12. Therefore in this condition, the working fluid flows in gaseous state to the steam drum 110 from both the first and the second heat exchange units 101, 103.

In an embodiment, the steam drum 110 is arranged at an height, with respect to the ground, higher than a respective height of the first and the second heat exchange units 101, 103: in more detail, the steam drum 110 is arranged at an height, with respect to the ground, higher than a respective height of the first and the second heat exchange chambers 11, 12 in order to promote the transit of the working fluid in gaseous state from the heat exchange units to the steam drum 110.

The steam drum also comprises a steam delivery duct 130 configured to deliver working fluid in gaseous state towards a recovery energy plant to recover, at least partially, the thermal energy contained in the steam.

The recovery energy plant may comprise a turbine to convert a pressure of the working fluid in gaseous state into mechanical or electrical energy. The recovery energy plant is not described in detail in the present document because the embodiment of the energy recovery plant is not essential for the purposes of the invention.

In a preferred embodiment, the fluid circuit comprises at least one auxiliary heat exchange unit 102, 104 arranged into, or in thermal contact to, at least one between the first and the second heat exchange chambers 11, 12: the auxiliary heat exchange unit 102, 104 is configured to heat up the working fluid flowing from the working fluid source 70 towards the steam drum 110. In other words, the auxiliary heat exchange unit 102, 104 determines a pre-heating of the working fluid before entering the steam drum.

In particular the treatment apparatus may comprises a single auxiliary heat exchange unit 102 arranged in the first or in the second heat exchange chamber 11, 12: alternatively, as shown in figure 1, the treatment apparatus may comprise a first and a second auxiliary heat exchange units 102, 104 respectively arrange into, or in thermal contact with, the first and the second heat exchange chambers 11, 12.

According to the second embodiment shown of figure 2, the fluid circuit may comprise an auxiliary heat exchange chamber 120 having a gas inlet 120a, connected to the main flue gas exhaust duct 27, and a gas outlet 120b. The fluid circuit also comprises an auxiliary heat exchange unit 102' arranged into, or in thermal contact with, the auxiliary heat exchange chamber 120, which is configured to pre-heat the working fluid coming from the fluid source 70 before entering into the steam drum 110. In particular an inlet 102'a of the auxiliary heat exchange unit 102' is fluidly connected to the fluid source 70 through the fluid delivery duct 73 and an outlet 102'b of the auxiliary heat exchange unit 102' is fluidly connected to the steam drum through a further fluid delivery duct 75. Notably, the auxiliary heat exchange chamber 120 and the auxiliary heat exchange unit 102' are distinct and separated from the first and second heat exchange chambers 11, 12 and first and second heat exchange units 101, 103. According to the second embodiment, the auxiliary heat exchange chamber 120 is configured to receive flue gases in the first, second and optionally third position of the regulating member 40, 41.

According to both the first and the second embodiment, the auxiliary heat exchange units 102, 104, 102' are arranged downstream with respect to the first and second heat exchange units 101, 103.

The control unit 200 of the treatment apparatus is configured to define a reference parameter based on at least one between the temperature or the flow rate values of the flue gases: for example the reference parameter may be defined by the flow rate value measure by the first or second flow rate sensor or by the flow rate sensor arranged on the main flue gas supply duct 22 or on the main flue gas exhaust duct 27. Alternatively, the reference parameter may be defined by the temperature value of the flue gases measured in the main flue gas supply duct 22 or in the first and/or second branches. Alternatively, the reference parameter may be based on a combination the temperature and flow rate values measured by the temperature and flow rate measuring devices. Furthermore, in a specific embodiment, the reference parameter is based on the first temperature variation parameter or on the second temperature variation parameter or both or a combination thereof. In addition, the reference parameter is based on a combination of the first temperature variation parameter and the flow rate value measured in the first branch: analogously, the reference parameter may be based on a combination of the second temperature variation parameter and the flow rate value measured in the second branch. In a further embodiment, the reference parameter may be based on a combination of the first and second temperature variation parameters and the flow rate values measured in the first second branches.

The reference parameter may also be based on a cooling parameter determined by the control unit, wherein the cooling parameter represents the current cooling rate of the flue gases based on the flow rate and the temperature variation parameter of the flue gases flowing across the first and/or the second heat exchange chambers 11, 12. In particular the control unit 200 may be configured to compute the cooling parameter according to the following formula:

$$C_{rate} = \frac{\Delta T}{t_{pg}}$$

where $t_{pg} = \frac{V_c}{F_g}$ wherein:

C_rate [$\Delta$C°/s] is the cooling parameter;
$\Delta$T [°C] is the temperature variation across the first and/or second heat exchange chambers 11, 12, in particular said temperature variation being computed as the difference between the temperature measured by the high temperature sensor and the low temperature sensor of the first and/or the second branch;
$t_{pg}$ [s] is the time taken by a gas particle to travel from the high temperature sensor to the low temperature sensor;
$V_c$ [m³] is the control volume defined as the gas volume included between the high temperature sensor to the low temperature sensor;
$F_g$ [m³/s] is the flow rate of the flue gases, in particular measured by the flow rate measuring device 60, 61. Furthermore, the control unit is configured to define a comparison between the reference parameter and at least one threshold value. The threshold value may comprise a temperature value and or a flow rate value relative to the reference parameter. In other words, if the reference parameter is based on a temperature or flow rate, the relative threshold value will be a temperature or flow rate threshold as well.

For example, if reference parameter, based on the cooling parameter, is lower than the cooling rate threshold value, the control unit commands the regulating member in the first position: alternatively, if the cooling parameter is higher than the cooling rate threshold value, the control unit commands the regulating member 40, 41 in the second position. The cooling rate threshold value may be set between 200°C/sec and 400°C/sec, in particular i.e. between 200°C/sec and 250°C/sec, or between 250°C/sec and 300°C/sec, or between 300°C/sec and 350°C/sec, or between 350°C/sec and 400°C/sec: this cooling rate interval may contribute to prevent or reduce dioxin and furans growth in the flue gases.

Alternatively, if the reference parameter, based on the temperature variation across the first and/or the second heat exchange chambers 11, 12, is lower than a respective temperature variation threshold value, the control unit commands the regulating member in the first position: alternatively, if the temperature variation is higher than the temperature variation threshold value, the control unit commands the regulating member 40, 41 in the second position.

According to a general concept, the treatment apparatus is configured to cool down the flue gases from a temperature comprised between 550-700°C (namely a temperature close to an output temperature of the flue gases from the gas source 20) to a lower temperature comprised between 150°C and 300°C, more in particular between 230°C and 270°C, more in particular to 250°C. Therefore, the temperature variation threshold value, which represents the desired temperature variation across the heat exchange chambers, is comprised between 280°C and 550°C, more in particular between 350°C and 450°C.

Although the above description refers to a first and a second heat exchange chambers 11, 12, the treatment apparatus 1 may comprise further heat exchange chambers, in particular a third or fourth exchange chambers, having respective inlets and outlets configured to respectively receive and exhaust the flue gases. The further heat exchange chambers may comprise further heat exchange units respectively arranged in each further heat exchange chamber and having the same features as the heat exchange units described before.

These additional exchange chambers are connected, from the point of view of the working fluid, to a single steam drum 110, which therefore allows the correct operation of the system even when the flow of hot fumes is active only in some branches and not in others.

**Claims**

1. Treatment apparatus (1) of hot flue gases emitted by an industrial plant, comprising a gas circuit and a fluid circuit,

the gas circuit comprising:

- at least a first and a second heat exchange chambers (11, 12) both comprising a respective gas inlet (11a, 12a) and gas outlet (11b, 12b), said first and second heat exchange chambers (11, 12) being configured to receive in inlet said flue gases;
- a first and a second flue gas supply ducts (23, 24) respectively connecting the inlets (11a, 12a) of said first and second heat exchange chambers (11, 12) to a flue gas source (20);
- a first and a second flue gas exhaust ducts (25, 26) respectively connected to the outlets (11b, 12b) of said first and second heat exchange chambers (11, 12) and configured to transport the flue gases out of the first and the second heat exchange chambers (11, 12),

wherein the first flue gas supply duct (23), the first flue gas exhaust duct (25) and the first heat exchange chamber (11) define a first branch of the gas circuit, while the second flue gas supply duct (24), the second flue gas exhaust duct (26) and the second heat exchange chamber (12) define a second branch of the gas circuit;

- at least one between a temperature measuring device (50, 50a, 51, 51a) and a flow rate measuring device (60, 61) configured to provide respectively a representative signal of a temperature and a flow rate of the flue gases;
- at least one regulating member (40, 41) movable at least between:

  ∘ a first position, wherein transit of the flue gases from the flue gas source (20) into the first heat exchange chamber (11) is allowed, while transit of flue gases from the flue gas source (20) into the second heat exchange chamber (12) is prevented or reduced, and
  ∘ a second position wherein transit of the flue gases from the flue gas source (20) into both the first and the second heat exchange chambers (11, 12) is allowed;

wherein the fluid circuit is configured to transport working fluid, in particular water, in a liquid phase and gaseous phase, said fluid circuit comprising:

- at least a first and a second heat exchange units (101, 103) respectively arranged into, or in thermal contact with, said first and second heat exchange chambers (11, 12) and configured to allow heat exchange between the flue gases and the working fluid;
- a steam drum (110) fluidly connected at least to the first and second heat exchange units (101, 103);

and wherein the treatment apparatus (1) further comprises a control unit (200) configured to:

- receive at least one between the representative signal of the temperature and the representative signal of the flow rate of the flue gases;
- determine at least one between a temperature and a flow rate value based on the respective representative signals;
- define at least one reference parameter based on at least one between the temperature or the flow rate values of the flue gases;
- define a comparison between said reference parameter and at least one threshold value;
- based on said comparison, command the at least one regulating member (40, 41) in the first or in the second position.

2. The treatment apparatus (1) according to claim 1, wherein the gas circuit comprises both the temperature measuring device (50, 50a, 51, 51a) and the flow rate measuring device (60, 61), the reference parameter being based on both temperature and flow rate values of the flue gases.

3. The treatment apparatus (1) of any one of the preceding claims, wherein the gas circuit comprises the temperature measuring device (50, 50a, 51, 51a), said temperature measuring device (50, 50a, 51, 51a) comprising at least one high temperature sensor (50, 51) arranged upstream the first and/or the second heat exchange chambers (11, 12),

and wherein said temperature measuring device (50, 50a, 51, 51a) comprises at least one low temperature sensor (50a, 51a) arranged downstream the first and/or second heat exchange chambers (11, 12), the control unit being configured to determine a temperature variation parameter as a difference between the temperature value measured by the at least one high temperature sensor (50, 51) and the temperature value measured by the at least one low temperature sensor (50a, 51a), said reference parameter being based on said temperature variation parameter.

4. The treatment apparatus (1) of any one of the preceding claims, wherein the temperature measuring device (50, 50a, 51, 51a) comprises a first high temperature sensor (50) arranged upstream the first heat exchange chamber (11) on the first flue gas supply duct (23), and a second high temperature sensor (51), separated and distinct from the first high temperature sensor (50), arranged upstream the second heat exchange chamber (12) on the second flue gas supply duct (24),
and wherein the temperature measuring device (50, 50a, 51, 51a) further comprises a first low temperature sensor (50a) arranged on the first flue gas exhaust duct (25) downstream the first heat exchange chamber (11), and a second low temperature sensor (51a) arranged on the second flue gas exhaust duct (26) downstream the second heat exchange chamber (12).

5. The treatment apparatus (1) of the preceding claims 3 or 4, wherein the control unit (200) is configured to determine at least one between:

   - a first temperature variation parameter representing the temperature difference of the flue gases between an upstream and downstream section of the first heat exchange chamber (11), and
   - a second temperature variation parameter representing the temperature difference of the flue gases between an upstream and downstream section of the second heat exchange chamber (12),
   said reference parameter being based on at least one between the first temperature variation parameter and the second temperature variation parameter or a combination thereof,.
   and
   wherein the control unit is configured to:

      - compare at least one between said first temperature variation parameter and said second temperature variation parameter, optionally a combination thereof, with a respective temperature variation threshold value;
      - if said temperature variation parameter is lower than said respective temperature variation threshold value, command the at least one regulating member (40, 41) in the first position;
      - if said temperature variation is higher than said respective temperature variation threshold value, command the at least one regulating member (40, 41) in the second position,

in particular wherein said temperature variation threshold value is comprised between 200°C and 600°C, in particular between 300°C and 500°, more in particular between 350°C and 450°C.

6. The treatment apparatus (1) of any one of the preceding claims from 2 to 5, wherein the first and the second heat exchange chambers (11, 12) are configured to determine a cooling process of the flue gases, the control unit (200) being configured to:

   - determine a cooling parameter representing the current cooling rate of the flue gases based on the flow rate value and the temperature variation parameter of the flue gases, in particular the first and/or the second temperature variation parameter;
   - set a cooling rate threshold value comprised between 200°C/sec and 400°C/sec, for example between 200°C/sec and 250°C/sec or between 250°C/sec and 300°C/sec or between 300°C/sec and 350°C/sec, or between 350°C/sec and 400°C/sec;
   - compare said cooling parameter with said cooling rate threshold value,
   - if the cooling parameter is lower than the cooling rate threshold value, command the regulating member in the first position;
   - optionally if the cooling parameter is higher than the cooling rate threshold value, command the at least one regulating member (40, 41) in the second position,

   said reference parameter being based on said cooling parameter and the at least one threshold value comprising said cooling rate threshold value.

7. The treatment apparatus (1) of any one of the preceding claims, wherein the step of defining the reference parameter comprises determining the flow rate of the flue gases, optionally a total flow rate, the control unit being further configured to:

   - compare said flow rate, optionally the total flow rate, with a respective flow rate threshold value;
   - if said flow rate is lower than said respective flow rate threshold value, command the at least one regulating member (40, 41) in the first position;
   - optionally if said flow rate is higher than said respective flow rate threshold value, command the at least one regulating member (40, 41) in the second position.

8. The treatment apparatus (1) of any one of the preceding claims, wherein the flow rate measuring device comprises at least a first and a second flow rate sensors (60, 61) respectively arranged on the first branch and on the second branch of the gas circuit and each configured to provide signals representing a flow rate of the flue gases respectively into the first and the second branches,

the control unit being configured to receive said representative signals of the flow rate and determine a first and a second flow rate values of the flue gases relative to the first and the second branches,

the reference parameter being based on said first and second flow rate values and optionally on a combination thereof,

in particular wherein the first and the second flow rate sensors (60, 61) are arranged respectively on:

- the first and the second flue gas supply ducts (23, 24), or
- the first and the second flue gas exhaust ducts (25, 26).

9. The treatment apparatus (1) of any one of the preceding claims, wherein the at least one regulating member comprises at least one between:

- a first and a second dampers (40, 41) respectively arranged on the first branch and on the second branch of the gas circuit, in particular the first and the second dumpers (40, 41) being arranged on:

  ◦ the first and the second flue gas supply ducts (23, 24), or
  ◦ the first and the second flue gas exhaust ducts (25, 26),
  and

- a first and a second booster (40, 41) respectively arranged on the first branch and on the second branch of the gas circuit, said booster comprising in particular a fan configured to promote or prevent the flow rate of the flue gases within the gas circuit, said booster comprising an electrical motor configured to rotate the fan.

10. The treatment apparatus (1) of any one of the preceding claims, wherein the fluid circuit comprises:

- a first delivery duct (111) fluidly connecting an outlet of the first heat exchange unit (101) to the steam drum (110), and configured to transport said working fluid in the gaseous phase from the first heat exchange unit (101) to the steam drum (110);
- a first return duct (112) connecting an inlet of the first heat exchange unit (101) to the steam drum (110), and configured to transport said working fluid in the liquid phase from the steam drum (110) to the first heat exchange unit (101);
- a second delivery duct (113) fluidly connecting an outlet of the second heat exchange unit (103) to the steam drum (110), and configured to transport said working fluid in the gaseous phase from the second heat exchange unit (103) to the steam drum (110);
- a second return duct (114) connecting an inlet of the second heat exchange unit (103) to the steam drum (110), and configured to transport said working fluid in the liquid phase from the steam drum (110) to the second heat exchange unit (103).

11. The treatment apparatus (1) of any one of the preceding claims, wherein the fluid circuit comprises a working fluid source (70) and at least one fluid delivery duct (73, 74), said at least one fluid delivery duct (73, 74) connecting the working fluid source (70) to the steam drum (110), the working fluid source (70) being configured to deliver working fluid to the steam drum (110),

and wherein the fluid circuit comprises at least one auxiliary heat exchange unit (102, 104) arranged into, or in thermal contact to, the first and/or the second heat exchange chamber (11, 12) and configured to heat up the working fluid flowing from the working fluid source (70) towards the steam drum (110),

wherein the fluid circuit comprises a first and a second auxiliary heat exchange units (102, 104) respectively arranged into, or in thermal contact to, the first and the second heat exchange chambers (11, 12) and configured to heat up the working fluid flowing from the working fluid source (70) towards the steam drum (110).

12. The treatment apparatus (1) of any one of the preceding claims, wherein the first heat exchange unit (101) defines a first surface for heat exchange between the flue gases and the working fluid, and the second heat exchange unit (103) defines a second surface for heat exchange between the flue gases and the working fluid, said first surface being different from, in particular lower than, said second surface, the at least one regulating member (40, 41) being movable in a third position wherein transit of the flue gases from the flue gas source (20) into the first heat exchange chamber (11) is prevented or reduced, while transit of flue gases from the flue gas source (20) into the second heat exchange chamber (12) is allowed,

optionally wherein the first exchanger chamber (11) has a different passage section with respect to the second heat exchanger chamber (12) to allow different flow rates of the flue gases.

13. Treatment apparatus (1) of any one of the preceding claims, wherein the first branch of the flue gas circuit is arranged in parallel with the second branch of the flue gas circuit according to a flue gas supply direction from the flue gas source (20), and wherein the first and second flue gas supply ducts (23, 24) are connected to the same flue gas source (20).

14. Treatment apparatus (1) of any one of the preceding claims, wherein the steam drum (110) is common to the first and second heat exchange units (101, 103).

15. Method for treating hot flue gases emitted by an industrial plant, said method being performed by a treatment apparatus optionally according to any one of the preceding claims, said apparatus comprising a gas circuit and a fluid circuit,

the gas circuit comprising:

- at least a first and a second heat exchange chambers (11, 12) both comprising a respective gas inlet (11a, 12a) and gas outlet (11b, 12b), said first and second heat exchange chambers (11, 12) being configured to receive in inlet said flue gases;
- a first and a second flue gas supply ducts (23, 24) respectively connecting the inlets (11a, 12a) of said first and second heat exchange chambers (11, 12) to a flue gas source (20);
- a first and a second flue gas exhaust duct (25, 26) respectively connected to the outlets (11b, 12b) of said first and second heat exchange chambers (11, 12) and configured to transport the flue gases out of the first and the second heat exchange chambers (11, 12), wherein the first flue gas supply duct (23), the first flue gas exhaust duct (25) and the first heat exchange chamber (11) define a first branch of the gas circuit, while the second flue gas supply duct (24), the second flue gas exhaust duct (26) and the second heat exchange chamber (12) define a second branch of the gas circuit;
- at least one between a temperature measuring device (50, 50a, 51, 51a) and a flow rate measuring device (60, 61) configured to provide respectively a representative signal of a temperature and a flow rate of the flue gases;

- at least one regulating member (40, 41) movable at least between:

  ∘ a first position, wherein transit of the flue gases from the flue gas source (20) into the first heat exchange chamber (11) is allowed, while transit of flue gases from the flue gas source (20) into the second heat exchange chamber (12) is prevented or reduced, and
  ∘ a second position wherein transit of the flue gases from the flue gas source (20) into both the first and the second heat exchange chambers (11, 12) is allowed;

wherein the fluid circuit is configured to transport working fluid, in particular water, in a liquid phase and gaseous phase, said fluid circuit comprising:

- at least a first and a second heat exchange units (101, 103) respectively arranged into, or in thermal contact with, said first and second heat exchange chambers (11, 12) and configured to allow heat exchange between the flue gases and the working fluid;
- a steam drum (110) fluidly connected at least to the first and second heat exchange units (101, 103);

wherein said method comprises at least the following steps performed by the treatment apparatus (1):

- receiving at least one between the representative signal of the temperature and the representative signal of the flow rate of the flue gases;
- determining at least one between a temperature and a flow rate representative value based on the respective representative signals;
- defining at least one reference parameter based on at least one between the temperature or the flow rate values of the flue gases;
- defining a comparison between said reference parameter and at least one threshold value;
- based on said comparison, commanding the at least one regulating member (40, 41) in the first or in the second position.

**Patentansprüche**

1. Behandlungsvorrichtung (1) für heiße Rauchgase, welche von einer Industrieanlage emittiert sind, umfassend einen Gaskreislauf und einen Fluidkreislauf,

wobei der Gaskreislauf umfasst:

- wenigstens eine erste und eine zweite Wärmeaustauschkammer (11, 12), welche beide einen entsprechenden Gaseinlass (11a, 12a) und Gasauslass (11b, 12b) umfassen, wobei die erste und zweite Wärmeaustauschkammer (11, 12) dazu eingerichtet sind, in dem Einlass die Rauchgase zu erhalten;
- eine erste und eine zweite Rauchgaszufuhrführung (23, 24), welche entsprechend die Einlässe (11a, 12a) der ersten und zweiten Wärmeaustauschkammer (11, 12) an eine Rauchgasquelle (20) verbinden;
- eine erste und eine zweite Rauchgasabfuhrführung (25, 26), welche entsprechend mit den Auslässen (11b, 12b) der ersten und zweiten Wärmeaustauschkammer (11, 12) verbunden sind und dazu eingerichtet sind, die Rauchgase aus der ersten und der zweiten Wärmeaustauschkammer (11, 12) zu transportieren,

wobei die erste Rauchgaszufuhrführung (23), die erste Rauchgasabfuhrführung (25) und die erste Wärmeaustauschkammer (11) einen ersten Abzweig des Gaskreislaufs definieren, während die zweite Rauchgaszufuhrführung (24), die zweite Rauchgasabfuhrführung (26) und die zweite Wärmeaustauschkammer (12) einen zweiten Abzweig des Gaskreislaufs definieren;

- wenigstens eines aus einer Temperaturmessvorrichtung (50, 50a, 51, 51a) und einer Strömungsratenmessvorrichtung (60, 61), welche dazu eingerichtet sind, entsprechend ein repräsentatives Signal einer Temperatur und einer Strömungsrate der Rauchgase zur Verfügung zu stellen;
- wenigstens ein Regulationsbauteil (40, 41), welches bewegbar ist wenigsten zwischen:

  ○ einer ersten Position, in welcher ein Übergang der Rauchgase von der Rauchgasquelle (20) in die erste Wärmeaustauschkammer (11) zugelassen ist, während ein Übergang von Rauchgasen von der Rauchgasquelle (20) in die zweite Wärmeaustauschkammer (12) unterbunden oder vermindert ist, und
  ○ einer zweiten Position, in welcher ein Übergang der Rauchgase von der Rauchgasquelle (20) in sowohl die erste als auch die zweite Wärmeaustauschkammer (11, 12) zugelassen ist;

wobei der Fluidkreislauf dazu eingerichtet ist, ein Arbeitsfluid, insbesondere Wasser, in einer Flüssigphase und Gasphase zu transportieren, wobei der Fluidkreislauf umfasst:

- wenigstens eine erste und eine zweite Wärmeaustauscheinheit (101, 103), welche entsprechend in die, oder in thermischem Kontakt mit der ersten und zweiten Wärmaustauschkammer (11, 12) angeordnet und dazu eingerichtet sind, einen Wärmeaustausch zwischen den Rauchgasen und dem Arbeitsfluid zuzulassen;
- eine Dampftrommel (110), welche wenigstens an die erste und zweite Wärmeaustauscheinheit (101, 103) fluidverbunden ist;

und wobei die Behandlungsvorrichtung (1) ferner eine Steuerungseinheit (200) umfasst, welche dazu eingerichtet ist:

- wenigstens eines aus dem repräsentativen Signal der Temperatur und dem repräsentativen Signal der Strömungsrate der Rauchgase zu erhalten;
- wenigstens eines aus einem Temperatur- und einem Strömungsratenwert zu bestimmen, welche auf den entsprechenden repräsentativen Signalen beruhen;
- wenigstens einen Referenzparameter zu definieren, welcher auf wenigstens einem aus den Temperatur- oder den Strömungsratenwerten der Rauchgase beruht;
- einen Vergleich zwischen dem Referenzparameter und wenigstens einem Schwellenwert zu definieren;
- beruhend auf dem Vergleich das wenigstens eine Regulationsbauteil (40, 41) zu der ersten oder zu der zweiten Position zu schicken.

2. Behandlungsvorrichtung (1) nach Anspruch 1, wobei der Gaskreislauf sowohl die Temperaturmessvorrichtung (50, 50a, 51, 51a) als auch die Strömungsratenmessvorrichtung (60, 61) umfasst, wobei der Referenzparameter sowohl auf den Temperatur- als auch den Strömungsratenwerten der Rauchgase beruht.

3. Behandlungsvorrichtung (1) nach einem der vorherigen Ansprüche, wobei der Gaskreislauf die Temperaturmessvorrichtung (50, 50a, 51, 51a) umfasst, wobei die Temperaturmessvorrichtung (50, 50a, 51, 51a) wenigstens einen Hochtemperatursensor (50, 51) umfasst, welcher zu der ersten und/oder der zweiten Wärmeaustauschkammer (11, 12) vorgelagert angeordnet ist,

und wobei die Temperaturmessvorrichtung (50, 50a, 51, 51a) wenigstens einen Niedrigtemperatursensor (50a, 51a) umfasst, welcher zu der ersten und/oder der zweiten Wärmeaustauschkammer (11, 12) nachgelagert angeordnet ist, wobei die Steuerungseinheit dazu eingerichtet ist, einen Temperaturvariationsparameter zu als einen Unterschied zwischen dem Temperaturwert, welcher durch den wenigstens einen Hochtemperatursensor (50, 51) gemessen ist, und dem Temperaturwert zu bestimmen, welcher durch den wenigstens einen Niedrigtemperatursensor (50a, 51a) gemessen ist, wobei der Referenzparameter auf dem Temperaturvariationsparameter beruht.

4. Behandlungsvorrichtung (1) nach einem der vorherigen Ansprüche, wobei die Temperaturmessvorrichtung (50, 50a, 51, 51a) einen ersten Hochtemperatursensor (50), welcher zu der ersten Wärmeaustauschkammer (11) vorgelagert an der ersten Rauchgaszufuhrführung (23) angeordnet ist, und einen zweiten Hochtemperatursensor (51) umfasst, welcher separiert und verschieden von dem ersten Hochtemperatursensor (50) und zu der zweiten Wärmeaustauschkammer (12) vorgelagert an der zweiten Rauchgaszufuhrführung (24) angeordnet ist, und wobei die Temperaturmessvorrichtung (50, 50a, 51, 51a) ferner einen ersten Niedrigtemperatursensor (50a), welcher zu der ersten Wärmeaustauschkammer (11) nachgelagert an der ersten Rauchgasabfuhrführung (25) angeordnet ist, und einen zweiten Niedrigtemperatursensor (51a) umfasst, welcher zu der zweiten Wärmeaustauschkammer (12) nachgelagert an der zweiten Rauchgasabfuhrführung (26) angeordnet ist.

5. Behandlungsvorrichtung (1) nach einem der vorherigen Ansprüche 3 oder 4, wobei die Steuerungseinheit (200) dazu eingerichtet ist, wenigstens eines zu bestimmen aus:

- einem ersten Temperaturvariationsparameter, welcher den Temperaturunterschied der Rauchgase zwischen einem vorgelagerten und nachgelagerten Abschnitt der ersten Wärmeaustauschkammer (11) repräsentiert, und
- einem zweiten Temperaturvariationsparameter, welcher den Temperaturunterschied der Rauchgase zwischen einem vorgelagerten und nachgelagerten Abschnitt der zweiten Wärmeaustauschkammer (12) repräsentiert, wobei der Referenzparameter auf wenigstens einem aus dem ersten Temperaturvariationsparameter und dem zweiten Temperaturvariationsparameter oder einer Kombination davon beruht, und wobei die Steuerungseinheit dazu eingerichtet ist:

- wenigstens eines aus dem ersten Temperaturvariationsparameter und dem zweiten Temperaturvariationsparameter, optional eine Kombination davon, mit einem entsprechenden Temperaturvariationsschwellenwert zu vergleichen;
- wenn der Temperaturvariationsparameter kleiner als der entsprechende Temperaturvariationsschwellenwert ist, das wenigstens eine Regulationsbauteil (40, 41) zu der ersten Position zu schicken,
- wenn die Temperaturvariation größer als der entsprechende Temperaturvariationsschwellenwert ist, das wenigstens eine Regulationsbauteil (40, 41) zu der zweiten Position zu schicken,

insbesondere wobei der Temperaturvariationsschwellenwert zwischen 200°C und 600°C umfasst ist, insbesondere zwischen 300°C und 500°, weiter insbesondere zwischen 350°C und 450°C.

6. Behandlungsvorrichtung (1) nach einem der vorherigen Ansprüche 2 bis 5, wobei die erste und die zweite Wärmeaustauschkammer (11, 12) dazu eingerichtet sind, einen Kühlungsprozess der Rauchgase zu bestimmen, wobei die Steuerungseinheit (200) dazu eingerichtet ist:

- einen Kühlparameter zu bestimmen, welcher die aktuelle Kühlrate der Rauchgase beruhend auf dem Strömungsratenwert und dem Temperaturvariationsparameter der Rauchgase, insbesondere dem ersten und/oder dem zweiten Temperaturvariationsparameter repräsentiert;
- einen Kühlratenschwellenwert festzulegen, welcher zwischen 200°C/Sekunde und 400°C/Sekunde umfasst ist, zum Beispiel zwischen 200°C/Sekunde und 250°C/Sekunde oder zwischen 250°C/Sekunde und 300°C/Sekunde oder zwischen 300°C/Sekunde und 350°C/Sekunde, oder zwischen 350°C/Sekunde und 400°C/Sekunde;
- den Kühlparameter mit dem Kühlratenschwellenwert zu vergleichen,
- wenn der Kühlparameter kleiner als der Kühlratenschwellenwert ist, das Regulationsbauteil zu der ersten Position zu schicken,
- optional wenn der Kühlparameter größer als der Kühlratenschwellenwert ist, das wenigstens eine Regulationsbauteil (40, 41) zu der zweiten Position zu schicken,

wobei der Referenzparameter auf dem Kühlparameter und dem wenigstens einen Schwellenwert beruht, welcher den Kühlratenschwellenwert umfasst.

**7.** Behandlungsvorrichtung (1) nach einem der vorherigen Ansprüche, wobei der Schritt eines Definierens des Referenzparameters ein Bestimmen der Strömungsrate der Rauchgase, optional eine totale Strömungsrate umfasst, wobei die Steuerungseinheit ferner dazu eingerichtet ist:

- die Strömungsrate, optional die totale Strömungsrate mit einem entsprechenden Strömungsratenschwellenwert zu vergleichen;
- wenn die Strömungsrate kleiner als der entsprechende Strömungsratenschwellenwert ist, das wenigstens eine Regulationsbauteil (40, 41) zu der ersten Position zu schicken
- optional wenn die Strömungsrate größer als der entsprechende Strömungsratenschwellenwert ist, das wenigstens eine Regulationsbauteil (40, 41) zu der zweiten Position zu schicken.

**8.** Behandlungsvorrichtung (1) nach einem der vorherigen Ansprüche, wobei die Strömungsratenmessvorrichtung wenigstens einen ersten und einen zweiten Strömungsratensensor (60, 61) umfasst, welche entsprechend and dem ersten Abzweig und an dem zweiten Abzweig des Gaskreislaufes angeordnet sind und welche jeweils dazu eingerichtet sind, Signale zur Verfügung zu stellen, welche eine Strömungsrate der Rauchgase entsprechend in den ersten und den zweiten Abzweig repräsentieren,

wobei die Steuerungseinheit dazu eingerichtet ist, die repräsentativen Signale der Strömungsrate zu erhalten und einen ersten und einen zweiten Strömungsratenwert der Rauchgase relativ zu dem ersten und dem zweiten Abzweig zu bestimmen,
wobei der Referenzparameter auf dem ersten und zweiten Strömungsratenwert und optional auf einer Kombination davon beruht,
insbesondere wobei der erste und der zweite Strömungsratensensor (60 , 61) entsprechend angeordnet sind an:

- der ersten und der zweiten Rauchgaszufuhrführung (23,24), oder
- der ersten und der zweiten Rauchgasabfuhrführung (25,26).

**9.** Behandlungsvorrichtung (1) nach einem der vorherigen Ansprüche, wobei das wenigstens eine Regulationsbauteil wenigstens eines umfasst aus:

- einem ersten und einem zweiten Dämpfer (40, 41), welche entsprechend an dem ersten Abzweig und an dem zweiten Abzweig des Gaskreislaufes angeordnet sind, insbesondere wobei der erste und der zweite Dämpfer (40, 41) angeordnet sind an:

  o der ersten und der zweiten Rauchgaszufuhrführung (23, 24), oder
  o der ersten und der zweiten Rauchgasabfuhrführung (25, 26),
  und

- einem ersten und einem zweiten Beschleuniger (40, 41), welche entsprechend an dem ersten Abzweig und dem zweiten Abzweig des Gaskreislaufs angeordnet sind, wobei der Beschleuniger insbesondere einen Ventilator umfasst, welcher dazu eingerichtet ist, die Strömungsrate der Rauchgase innerhalb des Gaskreislaufes zu unterstützen oder zu unterbinden, wobei der Beschleuniger einen Elektromotor umfasst, welcher dazu eingerichtet ist, den Ventilator zu rotieren.

**10.** Behandlungsvorrichtung (1) nach einem der vorherigen Ansprüche, wobei der Fluidkreislauf umfasst:

- eine erste Übergabeführung (111), welche einen Auslass der ersten Wärmeaustauscheinheit (101) in Fluidverbindung mit der Dampftrommel (110) setzt, und dazu eingerichtet ist, das Arbeitsfluid in der Gasphase von der ersten Wärmeaustauscheinheit (101) zu der Dampftrommel (110) zu transportieren;
- eine erste Rücknahmeführung (112), welche einen Einlass der ersten Wärmeaustauscheinheit (101) in Verbindung mit der Dampftrommel (110) setzt, und dazu eingerichtet ist, das Arbeitsfluid in der Flüssigphase von der Dampftrommel (110) zu der ersten Wärmeaustauscheinheit (101) zu transportieren;
- eine zweite Übergabeführung (113), welche einen Auslass der zweiten Wärmeaustauscheinheit (103) in Fluidverbindung mit der Dampftrommel (110) setzt, und dazu eingerichtet ist, das Arbeitsfluid in der Gasphase von der zweiten Wärmeaustauscheinheit (103) zu der Dampftrommel (110) zu transportieren;
- eine zweite Rücknahmeführung (114), welche einen Einlass der zweiten Wärmeaustauscheinheit (103) in Verbindung mit der Dampftrommel (110) setzt, und dazu eingerichtet ist, das Arbeitsfluid in der Flüssigphase von der Dampftrommel (110) zu der zweiten Wärmeaustauscheinheit (103) zu transportieren.

**11.** Behandlungsvorrichtung (1) nach einem der vorherigen Ansprüche, wobei der Fluidkreislauf eine Arbeitsfluidquelle (70) und wenigsten eine Fluidübergabeführung (73, 74) umfasst, wobei die wenigstens eine Fluidübergabeführung (73, 74) die Arbeitsfluidquelle (70) mit der Dampftrommel (110) verbindet, wobei die Arbeitsfluidquelle (70) dazu eingerichtet ist, Arbeitsfluid zu der Dampftrommel (110) zu übergeben,

und wobei der Fluidkreislauf wenigstens eine Hilfswärmeaustauscheinheit (102, 104) umfasst, welche in die, oder in thermischem Kontakt mit der ersten und/oder der zweiten Wärmeaustauschkammer (11,12) angeordnet und dazu eingerichtet ist, das Arbeitsfluid, welches von der Arbeitsfluidquelle (70) zu der Dampftrommel (110) fließt, zu erwärmen, wobei der Fluidkreislauf eine erste und eine zweite Hilfswärmeaustauscheinheit (102, 104) umfasst, welche entsprechend in die, oder in thermischem Kontakt mit der ersten und der zweiten Wärmeaustauschkammer (11,12) angeordnet und dazu eingerichtet sind, das Arbeitsfluid, welches von der Arbeitsfluidquelle (70) zu der Dampftrommel (110) fließt, zu erwärmen.

12. Behandlungsvorrichtung (1) nach einem der vorherigen Ansprüche, wobei die erste Wärmeaustauscheinheit (101) eine erste Fläche für einen Wärmeaustausch zwischen den Rauchgasen und dem Arbeitsfluid definiert, und die zweite Wärmeaustauscheinheit (103) eine zweite Fläche für einen Wärmeaustausch zwischen den Rauchgasen und dem Arbeitsfluid definiert, wobei die erste Fläche verschieden von, insbesondere niedriger als, die zweite Fläche ist, wobei das wenigste eine Regulationsbauteil (40, 41) zu einer dritten Position bewegbar ist, wobei ein Übergang der Rauchgase von der Rauchgasquelle (20) in die erste Wärmeaustauschkammer (11) unterbunden oder vermindert ist, während ein Übergang der Rauchgase von der Rauchgasquelle (20) in die zweite Wärmeaustauschkammer (12) zugelassen ist, optional wobei die erste Austauschkammer (11) einen verschiedenen Durchgangsabschnitt aufweist in Bezug auf die zweite Wärmeaustauschkammer (12), um verschiedene Strömungsraten der Rauchgase zuzulassen.

13. Behandlungsvorrichtung (1) nach einem der vorherigen Ansprüche, wobei der erste Abzweig des Rauchgaskreislaufs parallel zum zweiten Abzweig des Rauchgaskreislaufs angeordnet ist entsprechend einer Rauchgaszuführungsrichtung von der Rauchgasquelle (20), und wobei die erste und die zweite Rauchgaszufuhrführung (23, 24) mit derselben Rauchgasquelle (20) verbunden sind.

14. Behandlungsvorrichtung (1) nach einem der vorherigen Ansprüche, wobei die Dampftrommel (110) der ersten und zweiten Wärmeaustauscheinheit (101,103) gemeinsam ist.

15. Verfahren zur Behandlung von heißen Rauchgasen, welche von einer Industrieanlage emittiert werden, wobei das Verfahren durch eine Behandlungsvorrichtung optional nach einem der vorherigen Ansprüche durchgeführt wird, wobei die Vorrichtung einen Gaskreislauf und einen Fluidkreislauf umfasst,

wobei der Gaskreislauf umfasst:

- wenigstens eine erste und eine zweite Wärmeaustauschkammer (11, 12), welche beide einen entsprechenden Gaseinlass (11a, 12a) und Gasauslass (11b, 12b) umfassen, wobei die erste und zweite Wärmeaustauschkammer (11, 12) dazu eingerichtet sind, in dem Einlass die Rauchgase zu erhalten;
- eine erste und eine zweite Rauchgaszufuhrführung (23, 24), welche entsprechend die Einlässe (11a, 12a) der ersten und zweiten Wärmeaustauschkammer (11, 12) an eine Rauchgasquelle (20) verbinden;
- eine erste und eine zweite Rauchgasabfuhrführung (25, 26), welche entsprechend mit den Auslässen (11b, 12b) der ersten und zweiten Wärmeaustauschkammer (11, 12) verbunden sind und dazu eingerichtet sind, die Rauchgase aus der ersten und der zweiten Wärmeaustauschkammer (11, 12) zu transportieren, wobei die erste Rauchgaszufuhrführung (23), die erste Rauchgasabfuhrführung (25) und die erste Wärmeaustauschkammer (11) einen ersten Abzweig des Gaskreislaufs definieren, während die zweite Rauchgaszufuhrführung (24), die zweite Rauchgasabfuhrführung (26) und die zweite Wärmeaustauschkammer (12) einen zweiten Abzweig des Gaskreislaufs definieren;
- wenigstens eines aus einer Temperaturmessvorrichtung (50, 50a, 51, 51a) und einer Strömungsratenmessvorrichtung (60, 61), welche dazu eingerichtet sind, entsprechend ein repräsentatives Signal einer Temperatur und einer Strömungsrate der Rauchgase zur Verfügung zu stellen;
- wenigstens ein Regulationsbauteil (40, 41), welches bewegbar ist wenigsten zwischen:

　　◦ einer ersten Position, in welcher ein Übergang der Rauchgase von der Rauchgasquelle (20) in die erste Wärmeaustauschkammer (11) zugelassen ist, während ein Übergang von Rauchgasen von der Rauchgasquelle (20) in die zweite Wärmeaustauschkammer (12) unterbunden oder vermindert ist, und

∘ einer zweiten Position, in welcher ein Übergang der Rauchgase von der Rauchgasquelle (20) in sowohl die erste als auch die zweite Wärmeaustauschkammer (11, 12) zugelassen ist;

wobei der Fluidkreislauf dazu eingerichtet ist, ein Arbeitsfluid, insbesondere Wasser, in einer Flüssigphase und Gasphase zu transportieren, wobei der Fluidkreislauf umfasst:

- wenigstens eine erste und eine zweite Wärmeaustauscheinheit (101, 103), welche entsprechend in die, oder in thermischem Kontakt mit der ersten und zweiten Wärmaustauschkammer (11, 12) angeordnet und dazu eingerichtet sind, einen Wärmeaustausch zwischen den Rauchgasen und dem Arbeitsfluid zuzulassen;
- eine Dampftrommel (110), welche wenigstens an die erste und zweite Wärmeaustauscheinheit (101, 103) fluidverbunden ist;

wobei das Verfahren wenigstens die folgenden Schritte umfasst, welche durch die Behandlungsvorrichtung (1) durchgeführt werden:

- ein Erhalten wenigstens eines aus dem repräsentativen Signal der Temperatur und dem repräsentativen Signal der Strömungsrate der Rauchgase;
- ein Bestimmen wenigstens eines aus einem repräsentativen Temperatur- und einem Strömungsratenwert, welche auf den entsprechenden repräsentativen Signalen beruhen;
- ein Definieren wenigstens eines Referenzparameters, welcher auf wenigstens einem aus den Temperatur- oder den Strömungsratenwerten der Rauchgase beruht;
- ein Definieren eines Vergleichs zwischen dem Referenzparameter und wenigstens einem Schwellenwert;
- beruhend auf dem Vergleich ein Schicken wenigstens eines Regulationsbauteils (40, 41) zu der ersten oder zu der zweiten Position.

**Revendications**

1. Appareil de traitement (1) de gaz de combustion chauds émis par une installation industrielle, comprenant un circuit de gaz et un circuit de fluide,

le circuit de gaz comprenant :

- au moins une première et une seconde chambre d'échange de chaleur (11, 12) comprenant toutes les deux un orifice d'entrée de gaz (11a, 12a) et un orifice de sortie de gaz (11b, 12b) respectifs, lesdites première et seconde chambre d'échange de chaleur (11, 12) étant configurées pour recevoir dans l'orifice d'entrée lesdits gaz de combustion ;
- une première et une seconde conduite d'alimentation de gaz de combustion (23, 24) raccordant respectivement les orifices d'entrée (11a, 12a) desdites première et seconde chambre d'échange de chaleur (11, 12) à une source de gaz de combustion (20) ;
- une première et une seconde conduite d'échappement de gaz de combustion (25, 26) respectivement raccordées aux orifices de sortie (11b, 12b) desdites première et seconde chambre d'échange de chaleur (11, 12) et configurées pour transporter les gaz de combustion hors de la première et de la seconde chambre d'échange de chaleur (11, 12),

la première conduite d'alimentation de gaz de combustion (23), la première conduite d'échappement de gaz de combustion (25) et la première chambre d'échange de chaleur (11) définissant une première ramification du circuit de gaz, tandis que la seconde conduite d'alimentation de gaz de combustion (24), la seconde conduite d'échappement de gaz de combustion (26) et la seconde chambre d'échange de chaleur (12) définissent une seconde ramification du circuit de gaz ;

- au moins l'un entre un dispositif de mesure de température (50, 50a, 51, 51a) et un dispositif de mesure de vitesse d'écoulement (60, 61) configuré pour fournir respectivement un signal représentatif d'une température et d'une vitesse d'écoulement des gaz de combustion ;
- au moins un élément de régulation (40, 41) mobile au moins entre :

∘ une première position, un transit des gaz de combustion depuis la source de gaz de combustion (20) dans la première chambre d'échange de chaleur (11) étant permis, tandis qu'un transit des gaz de combustion depuis la source de gaz de combustion (20) dans la seconde chambre d'échange de chaleur (12) étant empêché ou réduit, et

○ une seconde position dans laquelle un transit des gaz de combustion depuis la source de gaz de combustion (20) dans à la fois la première et la seconde chambre d'échange de chaleur (11, 12) étant permis ;

le circuit de fluide étant configuré pour transporter un fluide de travail, en particulier de l'eau, sous une phase liquide et une phase gazeuse, ledit circuit de fluide comprenant :

- au moins une première et une seconde unité d'échange de chaleur (101, 103) respectivement disposées à l'intérieur, ou en contact thermique avec, lesdites première et seconde chambre d'échange de chaleur (11, 12) et configurées pour permettre l'échange de chaleur entre les gaz de combustion et le fluide de travail ;
- un tambour de vapeur (110) raccordé fluidiquement au moins à la première et à la seconde unité d'échange de chaleur (101, 103) ;

et l'appareil de traitement (1) comprenant en outre une unité de commande (200) configurée pour :

- recevoir au moins l'un entre le signal représentatif de la température et le signal représentatif de la vitesse d'écoulement des gaz de combustion ;
- déterminer au moins l'une entre une température et une valeur de vitesse d'écoulement sur la base des signaux représentatifs respectifs ;
- définir au moins un paramètre de référence sur la base d'au moins l'une entre les valeurs de température ou de vitesse d'écoulement des gaz de combustion ;
- définir une comparaison entre ledit paramètre de référence et au moins une valeur seuil ;
- sur la base de ladite comparaison, commander le au moins un élément de régulation (40, 41) dans la première ou dans la seconde position.

2. Appareil de traitement (1) selon la revendication 1, le circuit de gaz comprenant à la fois le dispositif de mesure de température (50, 50a, 51, 51a) et le dispositif de mesure de vitesse d'écoulement (60, 61), le paramètre de référence étant basé à la fois sur les valeurs de température et de vitesse d'écoulement des gaz de combustion.

3. Appareil de traitement (1) selon l'une quelconque des revendications précédentes, le circuit de gaz comprenant le dispositif de mesure de température (50, 50a, 51, 51a), ledit dispositif de mesure de température (50, 50a, 51, 51a) comprenant au moins un capteur de température élevée (50, 51) disposé en amont de la première et/ou de la seconde chambre d'échange de chaleur (11, 12),

et ledit dispositif de mesure de température (50, 50a, 51, 51a) comprenant au moins un capteur de température faible (50a, 51a) disposé en aval de la première et/ou de la seconde chambre d'échange de chaleur (11, 12), l'unité de commande étant configurée pour déterminer un paramètre de variation de température comme une différence entre la valeur de température mesurée par le au moins un capteur de température élevée (50, 51) et la valeur de température mesurée par le au moins un capteur de température faible (50a, 51a), ledit paramètre de référence étant basé sur ledit paramètre de variation de température.

4. Appareil de traitement (1) selon l'une quelconque des revendications précédentes, le dispositif de mesure de température (50, 50a, 51, 51a) comprenant un premier capteur de température élevée (50) disposé en amont de la première chambre d'échange de chaleur (11) sur la première conduite d'alimentation de gaz de combustion (23), et un second capteur de température élevée (51), séparé et distinct du premier capteur de température élevée (50), disposé en amont de la seconde chambre d'échange de chaleur (12) sur la seconde conduite d'alimentation de gaz de combustion (24), et le dispositif de mesure de température (50, 50a, 51, 51a) comprenant en outre un premier capteur de température faible (50a) disposé sur la première conduite d'échappement de gaz de combustion (25) en aval de la première chambre d'échange de chaleur (11), et un second capteur de température faible (51a) disposé sur la seconde conduite d'échappement de gaz de combustion (26) en aval de la seconde chambre d'échange de chaleur (12).

5. Appareil de traitement (1) selon les revendications 3 ou 4, l'unité de commande (200) étant configurée pour déterminer au moins l'un entre :

- un premier paramètre de variation de température représentant la différence de température des gaz de combustion entre une section amont et aval de la première chambre d'échange de chaleur (11), et

- un second paramètre de variation de température représentant la différence de température des gaz de combustion entre une section amont et aval de la seconde chambre d'échange de chaleur (12),

ledit paramètre de référence étant basé sur au moins l'un entre le premier paramètre de variation de température et le second paramètre de variation de température ou une combinaison de ceux-ci, et

l'unité de commande étant configurée pour :

- comparer au moins l'un entre ledit premier paramètre de variation de température et ledit second paramètre de variation de température, éventuellement une combinaison de ceux-ci, avec une valeur seuil de variation de température respective ;
- si ledit paramètre de variation de température est inférieur à ladite valeur seuil de variation de température respective, commander le au moins un élément de régulation (40, 41) dans la première position ;
- si ladite variation de température est supérieure à ladite valeur seuil de variation de température respective, commander le au moins un élément de régulation (40, 41) dans la seconde position,

en particulier ladite valeur seuil de variation de température étant comprise entre 200°C et 600°C, en particulier entre 300°C et 500°, plus particulièrement entre 350°C et 450°C.

6. Appareil de traitement (1) selon l'une quelconque des revendications précédentes de 2 à 5, la première et la seconde chambre d'échange de chaleur (11, 12) étant configurées pour déterminer un processus de refroidissement des gaz de combustion, l'unité de commande (200) étant configurée pour :

déterminer un paramètre de refroidissement représentant la vitesse de refroidissement présente des gaz de combustion sur la base de la valeur de la vitesse d'écoulement et du paramètre de variation de température des gaz de combustion, en particulier du premier et/ou du second paramètre de variation de température ;

- définir une valeur seuil de vitesse de refroidissement comprise entre 200°C/s et 400°C/s, par exemple entre 200°C/s et 250°C/s ou entre 250°C/s et 300°C/s ou entre 300°C/s et 350°C/s, ou entre 350°C/s et 400°C/s ;

- comparer ledit paramètre de refroidissement à ladite valeur seuil de vitesse de refroidissement,
- si le paramètre de refroidissement est inférieur à la valeur seuil de vitesse de refroidissement, commander l'élément de régulation dans la première position ;
- éventuellement si le paramètre de refroidissement est supérieur à la valeur seuil de vitesse de refroidissement, commander le au moins un élément de régulation (40, 41) dans la seconde position,

ledit paramètre de référence étant basé sur ledit paramètre de refroidissement et la au moins une valeur seuil comprenant ladite valeur seuil de vitesse de refroidissement.

7. Appareil de traitement (1) selon l'une quelconque des revendications précédentes, l'étape de définition du paramètre de référence comprenant la détermination de la vitesse d'écoulement des gaz de combustion, éventuellement une vitesse d'écoulement totale, l'unité de commande étant en outre configurée pour :

- comparer ladite vitesse d'écoulement, éventuellement la vitesse d'écoulement totale, à une valeur seuil de vitesse d'écoulement respective ;
- si ladite vitesse d'écoulement est inférieure à ladite valeur seuil de vitesse d'écoulement respective, commander le au moins un élément de régulation (40, 41) dans la première position ;
- éventuellement si ladite vitesse d'écoulement est supérieure à ladite valeur seuil de vitesse d'écoulement respective, commander le au moins un élément de régulation (40, 41) dans la seconde position.

8. Appareil de traitement (1) selon l'une quelconque des revendications précédentes, le dispositif de mesure de vitesse d'écoulement comprenant au moins un premier et un second capteur de vitesse d'écoulement (60, 61) respectivement disposés sur la première ramification et sur la seconde ramification du circuit de gaz et configuré chacun pour fournir des signaux représentant une vitesse d'écoulement des gaz de combustion respectivement dans la première et la seconde ramification,

l'unité de commande étant configurée pour recevoir lesdits signaux représentatifs de la vitesse d'écoulement et déterminer une première et une seconde valeur de vitesse d'écoulement des gaz de combustion par rapport à la première et à la seconde ramification,
le paramètre de référence étant basé sur lesdites première et seconde valeur de vitesse d'écoulement et éventuellement sur une combinaison de celles-ci,

en particulier le premier et le second capteur de vitesse d'écoulement (60, 61) étant agencés respectivement sur :

- la première et la seconde conduite d'alimentation de gaz de combustion (23, 24), ou
- la première et la seconde conduite d'échappement de gaz de combustion (25, 26).

9. Appareil de traitement (1) selon l'une quelconque des revendications précédentes, le au moins un élément de régulation comprenant au moins l'un entre :

- un premier et un second clapet (40, 41) respectivement disposés sur la première ramification et sur la seconde ramification du circuit de gaz, en particulier le premier et le second clapet (40, 41) étant disposés sur :

◦ la première et la seconde conduite d'alimentation de gaz de combustion (23, 24), ou

◦ la première et la seconde conduite d'échappement de gaz de combustion (25, 26), et

- un premier et un second propulseur (40, 41) respectivement disposés sur la première ramification et sur la seconde ramification du circuit de gaz, ledit propulseur comprenant en particulier un ventilateur configuré pour favoriser ou empêcher la vitesse d'écoulement des gaz de combustion à l'intérieur du circuit de gaz, ledit propulseur comprenant un moteur électrique configuré pour faire tourner le ventilateur.

10. Appareil de traitement (1) selon l'une quelconque des revendications précédentes, le circuit de fluide comprenant :

- une première conduite de distribution (111) raccordant fluidiquement un orifice de sortie de la première unité d'échange de chaleur (101) au tambour de vapeur (110), et configurée pour transporter ledit fluide de travail sous la phase gazeuse depuis la première unité d'échange de chaleur (101) vers le tambour de vapeur (110) ;
- une première conduite de retour (112) raccordant un orifice d'entrée de la première unité d'échange de chaleur (101) au tambour de vapeur (110), et configurée pour transporter ledit fluide de travail sous la phase liquide depuis le tambour de vapeur (110) vers la première unité d'échange de chaleur (101) ;
- une seconde conduite de distribution (113) raccordant fluidiquement un orifice de sortie de la seconde unité d'échange de chaleur (103) au tambour de vapeur (110), et configurée pour transporter ledit fluide de travail sous la phase gazeuse depuis la seconde unité d'échange de chaleur (103) vers le tambour de vapeur (110) ;
- une seconde conduite de retour (114) raccordant un orifice d'entrée de la seconde unité d'échange de chaleur (103) au tambour de vapeur (110), et configurée pour transporter ledit fluide de travail sous la phase liquide depuis le tambour de vapeur (110) vers la seconde unité d'échange de chaleur (103).

11. Appareil de traitement (1) selon l'une quelconque des revendications précédentes, le circuit de fluide comprenant une source de fluide de travail (70) et au moins une conduite de distribution de fluide (73, 74), ladite au moins une conduite de distribution de fluide (73, 74) raccordant la source de fluide de travail (70) au tambour de vapeur (110), la source de fluide de travail (70) étant configurée pour distribuer du fluide de travail au tambour de vapeur (110),

et le circuit de fluide comprenant au moins une unité d'échange de chaleur auxiliaire (102, 104) disposée à l'intérieur, ou en contact thermique avec, la première et/ou la seconde chambre d'échange de chaleur (11, 12) et configurée pour chauffer le fluide de travail s'écoulant depuis la source de fluide de travail (70) vers le tambour de vapeur (110),

le circuit de fluide comprenant une première et une seconde unité d'échange de chaleur auxiliaire (102, 104) respectivement disposées à l'intérieur, ou en contact thermique avec, la première et la seconde chambre d'échange de chaleur (11, 12) et configurées pour chauffer le fluide de travail s'écoulant depuis la source de fluide de travail (70) vers le tambour de vapeur (110).

12. Appareil de traitement (1) selon l'une quelconque des revendications précédentes, la première unité d'échange de chaleur (101) définissant une première surface pour l'échange de chaleur entre les gaz de combustion et le fluide de travail, et la seconde unité d'échange de chaleur (103) définissant une seconde surface pour l'échange de chaleur entre les gaz de combustion et le fluide de travail, ladite première surface étant différente de, en particulier inférieure à, ladite seconde surface, le au moins un élément de régulation (40, 41) étant mobile dans une troisième position dans laquelle un transit des gaz de combustion depuis la source de gaz de combustion (20) dans la première chambre d'échange de chaleur (11) est empêché ou réduit,

tandis qu'un transit des gaz de combustion depuis la source de gaz de combustion (20) dans la seconde chambre d'échange de chaleur (12) est permis,
éventuellement la première chambre d'échange (11) ayant une section de passage différente par rapport à la seconde chambre d'échange de chaleur (12) pour permettre différentes vitesses d'écoulement des gaz de combustion.

13. Appareil de traitement (1) selon l'une quelconque des revendications précédentes, la première ramification du circuit de gaz de combustion étant disposée en parallèle de la seconde ramification du circuit de gaz de combustion selon un sens d'alimentation de gaz de combustion depuis la source de gaz de combustion (20),
et la première et la seconde conduite d'alimentation de gaz de combustion (23, 24) étant raccordées à la même source de gaz de combustion (20).

14. Appareil de traitement (1) selon l'une quelconque des revendications précédentes, le tambour de vapeur (110) étant commun à la première et à la seconde unité d'échange de chaleur (101, 103).

15. Procédé de traitement de gaz de combustion chauds émis par une installation industrielle, ledit procédé étant exécuté par un appareil de traitement éventuellement selon l'une quelconque des revendications précédentes, ledit appareil comprenant un circuit de gaz et un circuit de fluide,

le circuit de gaz comprenant :

- au moins une première et une seconde chambre d'échange de chaleur (11, 12) comprenant toutes les deux un orifice d'entrée de gaz (11a, 12a) et un orifice de sortie de gaz (11b, 12b) respectifs, lesdites première et seconde chambre d'échange de chaleur (11, 12) étant configurées pour recevoir dans l'orifice d'entrée lesdits gaz de combustion ;
- une première et une seconde conduite d'alimentation de gaz de combustion (23, 24) raccordant respectivement les orifices d'entrée (11a, 12a) desdites première et seconde chambre d'échange de chaleur (11, 12) à une source de gaz de combustion (20) ;
- une première et une seconde conduite d'échappement de gaz de combustion (25, 26) respectivement raccordées aux orifices de sortie (11b, 12b) desdites première et seconde chambre d'échange de chaleur (11, 12) et configurées pour transporter les gaz de combustion hors de la première et de la seconde chambre d'échange de chaleur (11, 12),

la première conduite d'alimentation de gaz de combustion (23), la première conduite d'échappement de gaz de combustion (25) et la première chambre d'échange de chaleur (11) définissant une première ramification du circuit de gaz, tandis que la seconde conduite d'alimentation de gaz de combustion (24), la seconde conduite d'échappement de gaz de combustion (26) et la seconde chambre d'échange de chaleur (12) définissant une seconde ramification du circuit de gaz ;

- au moins l'un entre un dispositif de mesure de température (50, 50a, 51, 51a) et un dispositif de mesure de vitesse d'écoulement (60, 61) configuré pour fournir respectivement un signal représentatif d'une température et d'une vitesse d'écoulement des gaz de combustion ;
- au moins un élément de régulation (40, 41) mobile au moins entre :

  ○ une première position, un transit des gaz de combustion depuis la source de gaz de combustion (20) dans la première chambre d'échange de chaleur (11) étant permis, tandis qu'un transit des gaz de combustion depuis la source de gaz de combustion (20) dans la seconde chambre d'échange de chaleur (12) étant empêché ou réduit, et
  ○ une seconde position dans laquelle un transit des gaz de combustion depuis la source de gaz de combustion (20) dans à la fois la première et la seconde chambre d'échange de chaleur (11, 12) étant permis ;

le circuit de fluide étant configuré pour transporter un fluide de travail, en particulier de l'eau, sous une phase liquide et une phase gazeuse, ledit circuit de fluide comprenant :

- au moins une première et une seconde unité d'échange de chaleur (101, 103) respectivement disposées à l'intérieur, ou en contact thermique avec, lesdites première et seconde chambre d'échange de chaleur (11, 12) et configurées pour permettre un échange de chaleur entre les gaz de combustion et le fluide de travail ;
- un tambour de vapeur (110) raccordé fluidiquement au moins à la première et à la seconde unité d'échange de chaleur (101, 103) ;

ledit procédé comprenant au moins les étapes suivantes exécutées par l'appareil de traitement (1) :

- recevoir au moins l'un entre le signal représentatif de la température et le signal représentatif de la vitesse d'écoulement des gaz de combustion ;
- déterminer au moins l'une entre une température et une valeur représentative de la vitesse d'écoulement sur la base des signaux représentatifs respectifs ;
- définir au moins un paramètre de référence sur la base d'au moins l'une entre les valeurs de température ou de vitesse d'écoulement des gaz de combustion ;
- définir une comparaison entre ledit paramètre de référence et au moins une valeur seuil ;
- sur la base de ladite comparaison, commander le au moins un élément de régulation (40, 41) dans la première ou dans la seconde position.

FIG. 1

FIG. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2012320941 A

- FR 1364535 A